(19) Europäisches Patentamt
European Patent Office
Office européen des brevets

(11) **EP 3 961 775 A1**

(12) **EUROPEAN PATENT APPLICATION**
published in accordance with Art. 153(4) EPC

(43) Date of publication:
**02.03.2022 Bulletin 2022/09**

(51) International Patent Classification (IPC):
**H01M 4/86** (2006.01)  **H01M 4/90** (2006.01)
**H01B 1/06** (2006.01)  **H01B 1/08** (2006.01)
**H01M 8/0273** (2016.01)  **H01M 8/12** (2016.01)
**H01M 8/1213** (2016.01)  **H01M 8/1253** (2016.01)
**H01M 8/126** (2016.01)

(21) Application number: **20794990.0**

(22) Date of filing: **20.02.2020**

(52) Cooperative Patent Classification (CPC):
**H01B 1/06; H01B 1/08; H01M 4/86; H01M 4/90;**
**H01M 8/0273; H01M 8/12; H01M 8/1213;**
**H01M 8/1253; H01M 8/126;** Y02E 60/50

(86) International application number:
**PCT/JP2020/006735**

(87) International publication number:
**WO 2020/217673 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2019 JP 2019084628**

(71) Applicant: **Panasonic Intellectual Property
Management Co., Ltd.
Osaka-shi, Osaka 540-6207 (JP)**

(72) Inventors:
• **KAMATA, Tomoya**
**Osaka-shi, Osaka 540-6207 (JP)**
• **KAKUWA, Takashi**
**Osaka-shi, Osaka 540-6207 (JP)**
• **KITA, Hiromi**
**Osaka-shi, Osaka 540-6207 (JP)**
• **KUROHA, Tomohiro**
**Osaka-shi, Osaka 540-6207 (JP)**

(74) Representative: **Grünecker Patent- und
Rechtsanwälte
PartG mbB
Leopoldstraße 4
80802 München (DE)**

(54) **MEMBRANE ELECTRODE ASSEMBLY AND SOLID OXIDE-TYPE FUEL CELL USING SAME**

(57)     A membrane electrode assembly according to the present disclosure includes an electrode, an electrolyte layer bonded to the electrode and containing an electrolyte having proton conductivity, a metal frame, and a bonding layer disposed between a peripheral part of the electrolyte layer and the metal frame and held in contact with each of the electrolyte layer and the metal frame, wherein the bonding layer has a thickness of greater than or equal to 0.50 mm.

FIG. 1

## Description

Technical Field

The present disclosure relates to a membrane electrode assembly and a solid oxide fuel battery using the membrane electrode assembly.

Background Art

For example, a solid oxide fuel battery is known as one of electrochemical devices using electrolyte materials made of solid oxides. Patent Literature (PTL) 1 discloses a solid oxide fuel battery in which a flat cell and a thin-plate holder frame are bonded to each other with glass or a brazing alloy. The solid oxide fuel battery disclosed in PTL 1 uses a flat solid electrolyte layer made of a zirconia sintered body (YSZ) in which, for example, yttria is doped.
However, when the electrolyte layer and the thin-plate holder frame are bonded and heat-treated, gaps generate between the electrolyte layer and the thin-plate holder frame due to wrinkles of the thin-plate holder frame, undulations of the thin-plate holder frame, and irregularities of the electrolyte layer, thus causing a gas leak.
PTL 2 discloses a ceramic assembly for use in the solid oxide fuel battery in which a bonding layer in a bonding portion between a ceramic substrate and a metal frame plate has a thickness of from 5 $\mu$m to 200 $\mu$m.

Citation List

Patent Literature

    PTL 1: Japanese Patent No. 3466960, Specification
    PTL 2: Japanese Patent No. 4995411, Specification

Summary of Invention

Technical Problem

In related-art solid oxide fuel batteries, studies have been made just on bonding between an electrolyte using yttria-stabilized zirconia serving as an oxide ion conductor and a metal frame. Therefore, sufficient studies have not been made on bonding between an electrolyte using a proton conductor exhibiting a greater difference in thermal expansion rate with respect to metal than the yttria-stabilized zirconia and the metal frame.
The present disclosure provides a membrane electrode assembly in which the proton conductor exhibiting a greater difference in thermal expansion rate with respect to metal than the yttria-stabilized zirconia is used as the electrolyte and a bonding force between the electrolyte and the metal frame is high.

Solution to Problem

The present disclosure provides a membrane electrode assembly including:

    an electrode;
    an electrolyte layer bonded to the electrode and containing an electrolyte having proton conductivity;
    a metal frame; and
    a bonding layer disposed between a peripheral part of the electrolyte layer and the metal frame and held in contact with each of the electrolyte layer and the metal frame,
    wherein the bonding layer has a thickness of greater than or equal to 0.50 mm.

Advantageous Effects of Invention

According to the present disclosure, the membrane electrode assembly can be provided in which a proton conductor is used as the electrolyte and a bonding force between the electrolyte and the metal frame is high.

Brief Description of Drawings

[Fig. 1] Fig. 1 is a perspective view of a membrane electrode assembly according to an embodiment of the present disclosure.

[Fig. 2] Fig. 2 is a schematic sectional view showing a structure of the membrane electrode assembly according to the embodiment of the present disclosure.

[Fig. 3] Fig. 3 is a schematic sectional view showing another structure of the membrane electrode assembly according to the embodiment of the present disclosure.

[Fig. 4] Fig. 4 is a schematic sectional view showing a structure of a solid oxide fuel battery cell.

[Fig. 5] Fig. 5 is an explanatory view for a heat stress generated in an electrolyte layer.

Description of Embodiments

(Underlying Knowledge Forming Basis of the Present Disclosure)

As a result of conducting intensive studies on the membrane electrode assembly disclosed in PTL 2, the inventors have attained the following finding.

The inventors prepared an electrolyte layer containing an electrolyte having proton conductivity and exhibiting a greater difference in thermal expansion rate with respect to metal than the yttria-stabilized zirconia was prepared. The electrolyte layer and a metal frame were bonded under the conditions disclosed in PTL 2. In a process of performing heat treatment for the bonding, or a process of performing reduction treatment on metal oxide in a fuel electrode at high temperature from about 600°C to 800°C after the heat treatment for the bonding, the inventors found a phenomenon that the electrolyte layer or a bonding layer was cracked, and that it was difficult to ensure gas sealing performance. More specifically, a thickness of the bonding layer was set to be from 5 $\mu$m to 200 $\mu$m, and the electrolyte layer and the metal frame were bonded to each other with a bonding material made of glass. Thereafter, in the process of performing the heat treatment on the electrolyte layer and the metal frame, or the process of performing the reduction treatment, the electrolyte layer and the bonding layer were cracked. The reason is considered to reside in that the difference in thermal expansion rate between the metal contained in the metal frame and the electrolyte contained in the electrolyte layer was great, and that a heat stress generated inside the electrolyte layer during the heat treatment and the oxidation treatment. Note that the thickness of the bonding layer in the related art is about 50 $\mu$m to 200 $\mu$m from the industrial point of view.

In relation to the membrane electrode assembly using the electrolyte having the proton conductivity, the inventors have studied a structure capable of relieving the heat stress generated inside the electrolyte layer. As a result, the inventors have succeeded in conceiving the membrane electrode assembly according to the present disclosure.

In other words, the inventors have attained the finding that the heat stress generated inside the electrolyte layer having the proton conductivity can be relieved when the membrane electrode assembly is fabricated under condition of increasing a thickness of the bonding layer disposed between the electrolyte layer and the metal frame.

The above-mentioned finding attained by the inventors has not yet been made open to the public and has a novel technical feature.

Embodiments of the present disclosure will be described below with reference to the drawings. The present disclosure is not limited to the following embodiments.

(Embodiment 1)

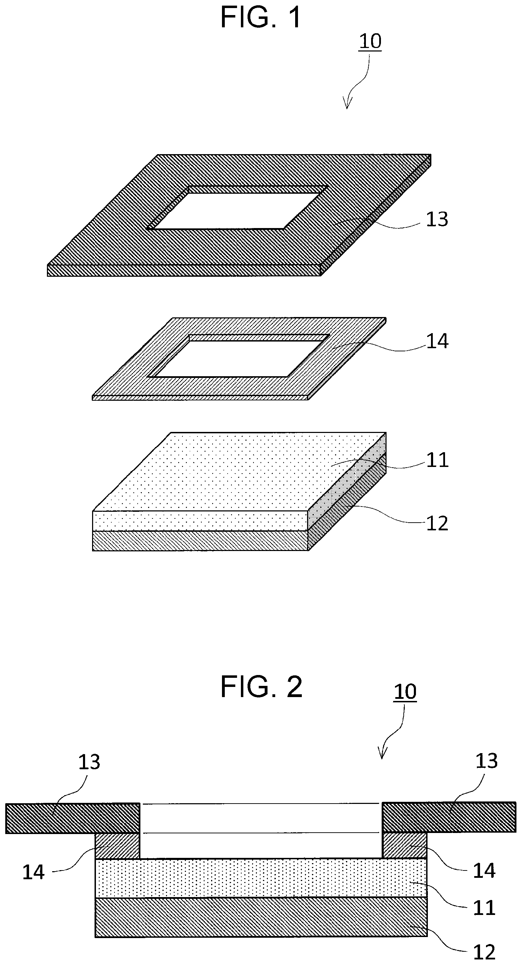

Fig. 1 is a perspective view of a membrane electrode assembly 10 according to the embodiment of the present disclosure. As illustrated in Fig. 1, the membrane electrode assembly 10 includes an electrolyte layer 11, an electrode 12, a metal frame 13, and a bonding layer 14. The electrolyte layer 11 contains an electrolyte material. The electrode 12 is in contact with hydrogen-containing gas. The metal frame 13 keeps the hydrogen-containing gas and air separated from each other. The bonding layer 14 bonds the metal frame 13 and the electrolyte layer 11. The electrolyte layer 11 is bonded to the electrode 12. The bonding layer 14 has a frame-like shape and is disposed in a peripheral part of the electrolyte layer 11. The bonding layer 14 is disposed between the electrolyte layer 11 and the metal frame 13. The metal frame 13 has a frame-like shape. The bonding layer 14 is in contact with each of the electrolyte layer 11 and the metal frame 13. As illustrated in Fig. 1, the components constituting the membrane electrode assembly 10 have a rectangular shape. In other words, each of the electrolyte layer 11, the electrode 12, the metal frame 13, and the bonding layer 14 has a rectangular shape. However, there are no specific limitations on the shape of the components constituting the membrane electrode assembly 10. The shape of the components constituting the membrane electrode assembly 10 may be circular, for example.

Fig. 2 is a sectional view showing a structure of the membrane electrode assembly 10 according to the embodiment of the present disclosure. As illustrated in Fig. 2, the membrane electrode assembly 10 includes the electrolyte layer 11, the electrode 12, the metal frame 13, and the bonding layer 14. The membrane electrode assembly 10 is used to constitute, for example, an electrochemical device. As illustrated in Fig. 2, the membrane electrode assembly 10 is constituted by the electrolyte layer 11, the electrode 12, the metal frame 13, and the bonding layer 14. More specifically, the electrode 12, the electrolyte layer 11, the bonding layer 14, and the metal frame 13 are laminated in the order mentioned.

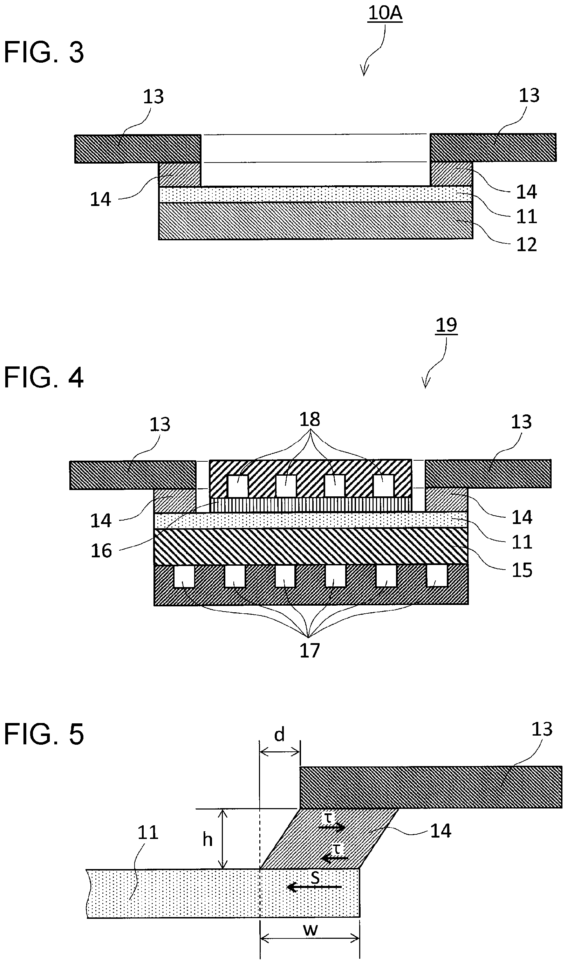

Fig. 3 is a sectional view showing a structure of a membrane electrode assembly 10A according to the embodiment of the present disclosure. As illustrated in Fig. 3, in the membrane electrode assembly 10A, the electrode 12 may have a greater thickness than the electrolyte layer 11. When the thickness of the electrolyte layer 11 is reduced, resistance to the ion conductivity in the electrolyte layer 11 is reduced. However, when the thickness of the electrolyte layer 11 is reduced, strength of the electrolyte layer 11 is also reduced. In consideration of the above point, the strength of the electrolyte layer 11 is ensured by increasing the thickness of the electrode 12 that is laminated on the electrolyte layer 11. Such a structure in which the thickness of the electrode 12 is greater than that of the electrolyte layer 11 is called an anode support structure. With the anode support structure, the membrane electrode assembly 10 can reduce the resistance to the ion conductivity in the electrolyte layer 11 while the strength of the electrolyte layer 11 is maintained.

The electrolyte material forming the electrolyte layer 11 is, for example, an electrolyte having the proton conductivity. The electrolyte having the proton conductivity is, for example, at least one selected from the group consisting of $Ba_aZr_{1-x}M_xO_3$, $Ba_aCe_{1-x}M_xO_3$, and $Ba_aZr_{1-x-y}Ce_xM_yO_3$. Here, M contains at least one selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu. "x" satisfies $0 < x < 1$. "y" satisfies $0 < y < 1$. "a" satisfies $0.95 \leq a \leq 1.05$. Such a proton conductor can conduct protons at low temperature of, for example, about 600°C. Accordingly, by using, as the electrolyte layer 11, the electrolyte having the proton conductivity, an operating temperature can be lowered in comparison with the related-art fuel battery using the yttria-stabilized zirconia as the electrolyte. In this Description, the "electrolyte having the proton conductivity" is called the "proton conductor" in some cases.

The electrode 12 may contain a material being able to activate oxidation reaction of hydrogen and having electrical conductivity. The material being able to activate the oxidation reaction of hydrogen and having the electrical conductivity is, for example, metal. The metal contains at least one selected from the group consisting of Ni, Pt, Pd, and Ir. The metal may be a compound containing Ni. Ni can more sufficiently activate the oxidation reaction of hydrogen and has high electrical conductivity. Therefore, Ni can be used for fuel electrodes of electrochemical devices such as the solid oxide fuel battery. The electrode 12 may be made of cermet. The cermet is a mixture of metal and ceramic material. The metal used for the cermet is, for example, Ni. The ceramic material used for the cermet is, for example, the proton conductor or an oxide ion conductor. Examples of the proton conductor may be barium zirconium oxide and barium cerium oxide. Examples of the oxide ion conductor may be stabilized zirconia, lanthanum gallate-based oxide, and ceria-based oxide. The cermet may be a mixture of Ni and the electrolyte material. Using the mixture of Ni and the electrolyte material increases a reaction field of the oxidation reaction of hydrogen. Hence the oxidation reaction of hydrogen can be more sufficiently activated.

When Ni is used for the electrode 12, the electrolyte material forming the electrolyte layer 11 may be, for example, at least one proton conductor selected from the group consisting of $Ba_aZr_{1-x}M_xO_3$, $Ba_aCe_{1-x}M_xO_3$, and $Ba_aZr_{1-x-y}Ce_xM_yO_3$. Here, M contains at least one selected from the group consisting of Sc, Lu, Yb, Tm, and In. "x" satisfies $0 < x < 1$. "y" satisfies $0 < y < 1$. "a" satisfies $0.95 \leq a \leq 1.05$. Those proton conductors can suppress reaction with Ni contained in the electrode. As a result, those proton conductors are less likely to form a $BaNiM_2O_5$ phase that is decomposed by reaction with $CO_2$. Hence those proton conductors are stable against $CO_2$. The electrolyte layer using any of those proton conductors can be applied to fuel batteries using natural gas as fuel and further can contribute to improving durability of the fuel batteries.

As the metal frame 13 for keeping the hydrogen-containing gas and air separated from each other, any suitable metal material can be selected depending on the application of the membrane electrode assembly. For example, when the metal frame 13 is used as a separator in the solid oxide fuel battery, a metal can be selected which is able to keep the hydrogen-containing gas and air separated from each other without being deteriorated at temperature of about 500°C to 800°C in use. The metal used for the metal frame 13 is, for example, ferrite stainless, martensite stainless, austenite stainless, a nickel-based alloy, or a chromium-based alloy.

The bonding layer 14 bonds the metal frame 13 and the electrolyte layer 11. For example, a glass seal capable of easily bonding them in an airtight manner is used for the bonding layer 14. There are no specific limitations on a glass material used for the glass seal, and an example of the glass material is borosilicate glass. As a material other than the glass seal, a brazing alloy can also be used for the bonding layer 14. In the case of using the brazing alloy, the metal frame 13 and the electrolyte layer 11 can be firmly bonded.

There are no specific limitations on a thermal expansion rate of the glass material used for the bonding layer 14. The thermal expansion rate of the glass material may be greater than that of the electrolyte contained in the electrolyte layer 11 and smaller than that of the metal contained in the metal frame 13.

The bonding layer 14 has a thickness of greater than or equal to 0.50 mm. There are no specific limitations on an upper limit of the thickness of the bonding layer 14, and the upper limit may be smaller than or equal to 5.0 mm or smaller than or equal to 2.0 mm. The bonding layer 14 with a uniform thickness can be obtained by appropriately setting the thickness of the bonding layer 14. As a result, gas sealing performance of the membrane electrode assembly 10 is ensured. Furthermore, by appropriately setting the thickness of the bonding layer 14, the membrane electrode assembly 10 becomes less likely to crack because the heat stress generated inside the electrolyte layer can be relieved when the heat treatment and the oxidation treatment are performed. It is hence possible to fabricate the membrane electrode assembly 10 in which a bonding force between the electrolyte layer 11 and the metal frame 13 is high.

(Embodiment 2)

Fig. 4 is a schematic sectional view showing a structure of a solid oxide fuel battery cell 19 according to an embodiment of the present disclosure. As illustrated in Fig. 4, the solid oxide fuel battery cell 19 includes an electrolyte layer 11, a metal frame 13, a bonding layer 14, and a fuel electrode 15. The fuel electrode 15 is in contact with the hydrogen-containing gas. The electrolyte layer 11, the metal frame 13, the bonding layer 14, and the fuel electrode 15 may be constituted, for example, in the structure of the membrane electrode assembly 10 or 10A. The solid oxide fuel battery cell 19 further includes an air electrode 16, a fuel gas path 17, and an air electrode gas path 18. The air electrode 16 is in contact with air. The hydrogen-containing gas to be supplied to the fuel electrode 15 flows through the fuel electrode gas path 17. The air electrode gas path 18 supplies oxidizer gas to the air electrode 16 therethrough. The oxidizer gas is typically air. The electrolyte layer 11 is disposed between the fuel electrode 15 and the air electrode 16. The electrolyte layer 11 is in direct contact with each of the fuel electrode 15 and the air electrode 16.

The fuel electrode 15 is constituted in a similar manner to the above-described electrode 12. The air electrode 16 contains a material capable of activating reduction reaction of oxygen and having electrical conductivity. The material capable of activating the reduction reaction of oxygen and having the electrical conductivity is, for example, lanthanum strontium cobalt composite oxide, lanthanum strontium cobalt iron composite oxide, lanthanum strontium iron composite oxide, or lanthanum nickel iron composite oxide.

There are no specific limitations on the shape of the fuel electrode gas path 17 and the shape of the air electrode gas path 18, and those shapes may be selected such that the hydrogen-containing gas and air can be supplied to surfaces of the membrane electrode assembly as evenly as possible.

EXAMPLE

A membrane electrode assembly according to EXAMPLE of the embodiment of the present disclosure will be described below. The following EXAMPLE is an example of the membrane electrode assembly according to the embodiment of the present disclosure, and the membrane electrode assembly according to the present disclosure is not limited to that described below as

EXAMPLE.

(Method of Bonding Metal frame and Electrolyte Layer with Glass Seal)

First, a method of bonding the metal frame and the electrolyte layer according to the embodiment will be described below.

The membrane electrode assembly was fabricated by laminating the electrode, the electrolyte layer, sheets of the glass seal material, and the metal frame in the order mentioned. A weight was put on the membrane electrode assembly to apply a load such that positions of individual component materials of the membrane electrode assembly were not misaligned. Then, those component materials were heat-treated in a muffle furnace, whereby the electrolyte layer and the metal frame were bonded to each other.

The heat treatment for the bonding was performed under the conditions recommended by a maker (Schott AG) of the glass seal material, namely the conditions of holding the glass seal material at 700°C for 30 min.

(Method of Performing Reduction Treatment on Electrode at High Temperature in Membrane Electrode Assembly)

A method of performing reduction treatment on the electrode at high temperature in the membrane electrode assembly according to the embodiment will be described below.

The membrane electrode assembly was attached to a jig allowing hydrogen gas to flow to only the electrode side, and a temperature of the electrode was raised up to 600°C in 5 hours while nitrogen gas was continuously supplied to flow to the electrode side. Then, the gas flowing to the electrode side was switched to a gas mixture of hydrogen and nitrogen, and a state after the switching was kept for about 12 hours. A volume ratio of hydrogen to nitrogen in the gas mixture was 3 : 97. Then, a hydrogen concentration was successively increased to 10%, 20%, 50%, and 100% about every hour, and the electrode of the membrane electrode assembly was completely reduced by supplying 100% of hydrogen gas to flow for 5 hours. After the reduction, the gas mixture was switched to nitrogen gas, and the temperature of the electrode was lowered down to a room temperature in 15 hours.

(Evaluation of Thickness of Bonding Layer)

A method of evaluating the thickness of the bonding layer in the embodiment will be described below.

A three-dimensional shape of the membrane electrode assembly fabricated in accordance with the above-described method was measured by using a 3D shape measuring device (VR-3200 made by KEYENCE CORPORATION), and the thickness of the bonding layer was calculated. More specifically, a laminate was first fabricated by laminating the electrode and the electrolyte layer. A thickness of the metal frame and a thickness of the laminate before bonding them were measured. The measurement was performed by using the 3D shape measuring device. Then, a thickness of the membrane electrode assembly fabricated in accordance with the above-described method was measured. The measurement was performed by using the 3D shape measuring device. The thickness of the bonding layer was obtained as a value resulting from subtracting a measured value of the thickness of the metal frame and a measured value of the thickness of the laminate from a measured value of the thickness of the membrane electrode assembly. The measurement using the 3D shape measuring device was performed at arbitrary multiple points on the membrane electrode assembly, and an average value calculated from the multiple measured results was obtained as the thickness of the bonding layer.

(Evaluation of Gas Sealing Performance)

Evaluation of the gas sealing performance in the membrane electrode assembly according to the embodiment will be described below. In the following, the evaluation of the gas sealing performance is called a "hydrogen gas leak test" in some cases.

The membrane electrode assembly fabricated in accordance with the above-described method was attached to the jig allowing hydrogen gas to flow to only the electrode side, and the hydrogen gas was supplied to flow to only the electrode side at the room temperature in each of the membrane electrode assembly after the heat treatment and the membrane electrode assembly after the reduction treatment. A flow rate of the hydrogen gas on the jig inlet side and a flow rate of the hydrogen gas on the jig outlet side were measured. The measurement was performed by using a high-accuracy precision membrane flowmeter (SF-1U made by HORIBA STEC, Co., Ltd.). When a difference between the flow rate of the hydrogen gas on the jig inlet side and the flow rate of the hydrogen gas on the jig outlet side was smaller than or equal to 1%, it was determined that the gas sealing performance was ensured.

(Preparation of Sample)

An electrolyte expressed by a composition formula of $Ba_{0.97}Zr_{0.8}Yb_{0.2}O_{3-\delta}$ and having the proton conductivity was used as the electrolyte in the membrane electrode assembly according to EXAMPLE. The cermet made of nickel oxide (made by Sumitomo Metal Mining, Co., Ltd.) and the above-described electrolyte having the proton conductivity was used as the electrode. A weight ratio of the cermet was NiO : $Ba_{0.97}Zr_{0.8}Yb_{0.2}O_{3-\delta}$ = 80 : 20. A thickness of the electrode was about 500 $\mu$m. A sheet of the electrolyte in a square shape with one side of 50 mm was used as the electrolyte layer. A thickness of the electrolyte sheet was about 15 $\mu$m. A metal sheet in a square shape with one side of 100 mm (ZMG232 made by Hitachi Metals, Ltd., metal thickness of 0.20 mm) was used as the metal frame. A square opening with one side of 42 mm was formed in a central region of the metal sheet. A glass sheet in a square shape with one side of 50 mm (GM31107 made by Schott AG, thickness of 500 $\mu$m) was used as the glass seal material. A square opening with one side of 42 mm was formed in a central region of the glass sheet. Membrane electrode assemblies different in thickness of the bonding layer were fabricated by laminating different numbers of the glass sheets in fabrications of the individual membrane electrode assemblies.

The membrane electrode assembly was fabricated by laminating the electrode, the electrolyte layer, the glass sheets, and the metal frame in the order mentioned. A weight of about 1000 gf was put on the membrane electrode assembly to apply a load such that positions of individual component materials of the membrane electrode assembly were not misaligned. Then, those component materials were heat-treated in the muffle furnace, whereby the electrolyte layer and the metal frame were bonded to each other. The heat treatment for the bonding was performed under the conditions recommended by the maker (Schott AG) of the glass seal material, namely the conditions of holding the glass seal material at 700°C for 30 min. Then, the reduction treatment of the electrode at high temperature was performed in accordance with the above-described method on the membrane electrode assembly after the heat treatment for the bonding, whereby the membrane electrode assembly after the reduction treatment was fabricated. On each of the membrane electrode assembly after the heat treatment and the membrane electrode assembly after the reduction treatment, the hydrogen gas leak test was performed at the room temperature. Test results are indicated in Table 1.

As indicated in Table 1, the result of the hydrogen gas leak test on each of the membrane electrode assembly after the heat treatment and the membrane electrode assembly after the reduction treatment was determined to be "○" when the difference between the flow rate of the hydrogen gas on the jig inlet side and the flow rate of the hydrogen gas on the jig outlet side was smaller than or equal to 1%. When the membrane electrode assembly was cracked after the heat treatment, the test result was determined to be "×". When the test result was determined to be "×" as in the above case, an evaluation result after the reduction treatment was indicated as "-" because the hydrogen leak test was not performed on the membrane electrode assembly after the reduction treatment. Cracking of the membrane electrode assembly was visually determined.

[Table 1]

| Thickness of Bonding Layer | Result of Hydrogen Gas Leak Test | |
| --- | --- | --- |
| | Membrane Electrode Assembly after Heat Treatment | Membrane Electrode Assembly after Reduction Treatment |
| 0.17 mm | × | - |
| 0.33 mm | × | - |
| 0.50 mm | ○ | ○ |
| 0.83 mm | ○ | ○ |

Table 1 indicates the results of the hydrogen gas leak test on the membrane electrode assembly after the heat treatment and the membrane electrode assembly after the reduction treatment according to EXAMPLE of the embodiment of the present disclosure. The thickness of the bonding layer was measured in accordance with the above-described evaluation method, and the hydrogen gas leak test was performed by using the above-described evaluation method for the gas sealing performance.

As seen from Table 1, when the thickness of the bonding layer is greater than or equal to 0.50 mm, the gas sealing is ensured in each of the membrane electrode assembly after the heat treatment and the membrane electrode assembly after the reduction treatment.

The reason is considered to reside in that, in fabricating the membrane electrode assembly with use of the electrolyte having the proton conductor and exhibiting a great difference in thermal expansion rate with respect to metal, the heat stress generated inside the electrolyte layer was relieved by increasing the thickness of the bonding layer.

Fig. 5 is an explanatory view for the heat stress generated inside the electrolyte layer in the process of performing the heat treatment and the process of performing the reduction treatment.

In this embodiment, the thermal expansion rate of the metal frame is greater than that of the electrolyte with the proton conductor. As illustrated in Fig. 5, therefore, when the heat treatment and the reduction treatment are performed, the bonding layer and the electrolyte layer are pulled outward in a radial direction due to expansion of the metal frame, whereby the heat stress is generated inside the electrolyte layer.

The heat stress generated inside the electrolyte layer is calculated as follows.

First, a shear strain ($\gamma$) in the bonding layer is expressed by the following formula (1).

$$\gamma = d \div h \qquad ...(1)$$

In the formula (1), d denotes a displacement magnitude of the metal frame and h denotes a height of the bonding layer.

A shear stress ($\tau$) in the bonding layer is expressed by the following formula (2).

$$\tau = G \times \gamma \qquad ...(2)$$

In the formula (2), G denotes a transverse elastic modulus.

Furthermore, a shear force (S) in a bonding surface between the electrolyte layer and the bonding layer is expressed by the following formula (3).

$$S = \tau \times w = (G \times \gamma) \times w \qquad ...(3)$$

In the formula (3), w denotes a width of the bonding layer.

On the other hand, the heat stress ($\sigma$) generated inside the electrolyte layer is expressed by the following formula (4).

$$\sigma = S \div A \qquad ...(4)$$

In the formula (4), A denotes an area subjected to the shear force. Here, the area (A) subjected to the shear force implies an area of the bonding surface between the electrolyte layer and the bonding layer. In the present disclosure, the area (A) subjected to the shear force can be regarded as the width (w) of the bonding layer. Therefore, the heat stress ($\sigma$) generated inside the electrolyte layer is expressed by the following formula (5).

$$\sigma = S \div w \qquad ...(5)$$

Accordingly, the heat stress ($\sigma$) generated inside the electrolyte layer is expressed by the following formula (6) from the formulae (1), (3) and (5).

$$\sigma = (G \times \gamma \times w) \div w = G \times \gamma = G \times d \div h \qquad ...(6)$$

Here, the displacement magnitude (d) of the metal frame is a constant that is determined based on the thermal expansion rate of the electrolyte and the thermal expansion rate of the metal frame. Accordingly, as understood from the formula (6), the thickness (h) of the bonding layer needs to be increased in order to reduce the heat stress ($\sigma$) generated inside the electrolyte layer. Thus, the heat stress generated inside the electrolyte layer can be relieved by increasing the thickness of the bonding layer.

On the other hand, the heat stress generated inside the electrolyte layer does not depend on the width of the bonding layer, the shape of the membrane electrode assembly, the thickness of the electrolyte layer, the thickness of the electrode, and the thickness of the metal frame. Hence the advantageous effects of the present disclosure is invariable with respect to those parameters.

Industrial Applicability

The membrane electrode assembly for the solid oxide fuel battery according to the present disclosure can be applied to electrochemical devices such as a fuel battery, a gas sensor, a hydrogen pump, and a water electrolysis device. Reference Signs List

10      membrane electrode assembly
11      electrolyte layer
12      electrode
13      metal frame
14      bonding layer
15      fuel electrode
16      air electrode
17      fuel electrode gas path
18      air electrode gas path
19      solid oxide fuel battery cell

**Claims**

1. A membrane electrode assembly comprising:

   an electrode;
   an electrolyte layer bonded to the electrode and containing an electrolyte having proton conductivity;
   a metal frame; and
   a bonding layer disposed between a peripheral part of the electrolyte layer and the metal frame and held in contact with each of the electrolyte layer and the metal frame,
   wherein the bonding layer has a thickness of greater than or equal to 0.50 mm.

2. The membrane electrode assembly according to Claim 1, wherein the bonding layer contains glass.

3. The membrane electrode assembly according to Claim 1 or 2, wherein the electrode contains metal activating oxidation reaction of hydrogen.

4. The membrane electrode assembly according to Claim 3, wherein the metal contains at least one selected from the group consisting of Ni, Pt, Pd, and Ir.

5. The membrane electrode assembly according to any one of Claims 1 to 4, wherein the electrolyte contains at least one selected from the group consisting of $Ba_aZr_{1-x}M_xO_3$, $Ba_aCe_{1-x}M_xO_3$, and $Ba_aZr_{1-x-y}Ce_xM_yO_3$,

   M contains at least one selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and
   $0 < x < 1$, $0 < y < 1$, and $0.95 \leq a \leq 1.05$ are satisfied.

6. The membrane electrode assembly according to Claim 5, wherein M contains at least one selected from the group consisting of Sc, Lu, Yb, Tm, and In.

7. The membrane electrode assembly according to any one of Claims 1 to 6, wherein the electrode has a greater thickness than the electrolyte layer.

8. The membrane electrode assembly according to any one of Claims 1 to 7, wherein the bonding layer has a thickness of smaller than or equal to 2.0 mm.

9. The membrane electrode assembly according to Claim 2, wherein the glass is borosilicate glass.

10. A fuel battery comprising:

    a fuel electrode;
    an air electrode; and
    an electrolyte layer disposed between the fuel electrode and the air electrode,
    wherein the fuel electrode and the electrolyte layer are constituted as components of the membrane electrode assembly according to any one of Claims 1 to 9.

11. An electrochemical device comprising:

    a fuel electrode;
    an air electrode; and
    an electrolyte layer disposed between the fuel electrode and the air electrode,
    wherein the fuel electrode and the electrolyte layer are constituted as components of the membrane electrode assembly according to any one of Claims 1 to 9.

# FIG. 1

<u>10</u>

13

14

11

12

# FIG. 2

<u>10</u>

13

13

14

14

11

12

FIG. 3

10A

13          13
14          14
            11
            12

FIG. 4

19

13    18    13
14          14
16          11
            15
      17

FIG. 5

d          13
11    h    τ    14
           τ
           S
      w

## INTERNATIONAL SEARCH REPORT

International application No.

PCT/JP2020/006735

### A. CLASSIFICATION OF SUBJECT MATTER

Int. Cl. H01M4/86(2006.01)i, H01M4/90(2006.01)i, H01B1/06(2006.01)i, H01B1/08(2006.01)i, H01M8/0273(2016.01)i, H01M8/12(2016.01)i, H01M8/1213(2016.01)i, H01M8/1253(2016.01)i, H01M8/126(2016.01)i
FI: H01M8/0273, H01M8/1253, H01M8/126, H01M8/1213, H01M4/86 T, H01M4/90 M, H01B1/06 A, H01B1/08, H01M8/12 101, H01M8/12 102A

According to International Patent Classification (IPC) or to both national classification and IPC

### B. FIELDS SEARCHED

Minimum documentation searched (classification system followed by classification symbols)
Int. Cl. H01M4/86, H01M4/90, H01B1/06, H01B1/08, H01M8/0273, H01M8/12, H01M8/1213, H01M8/1253, H01M8/126

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-322451 A (NGK SPARK PLUG CO., LTD.) 17 November 2005, claim 1, paragraphs [0013], [0014], [0019], [0027], [0028], fig. 2, 6 | 1-11 |
| A | JP 2015-52139 A (NGK SPARK PLUG CO., LTD.) 19 March 2015, paragraphs [0027], [0034], [0052], [0055], fig. 3 | 1-11 |
| P, X | JP 2019-185883 A (PANASONIC INTELLECTUAL PROPERTY MANAGEMENT CO., LTD.) 24 October 2019, claims 1, 4-5, paragraphs [0062], [0063], [0066], [0072], [0076], [0077], [0082], [0083], fig. 2 | 1-11 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.04.2020 | 21.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

Information on patent family members

| International application No. |
| --- |
| PCT/JP2020/006735 |

| Patent Documents referred to in the Report | Publication Date | Patent Family | Publication Date |
| --- | --- | --- | --- |
| JP 2005-322451 A | 17.11.2005 | (Family: none) | |
| JP 2015-52139 A | 19.03.2015 | (Family: none) | |
| JP 2019-185883 A | 24.10.2019 | US 2019/0305332 A1 claim 1, paragraphs [0068], [0069], [0072], [0078], [0083], [0088], [0089], fig. 2 EP 3550654 A1 | |

Form PCT/ISA/210 (patent family annex) (January 2015)

13

**REFERENCES CITED IN THE DESCRIPTION**

**Patent documents cited in the description**

- JP 3466960 B
- JP 4995411 B